(19) Europäisches Patentamt
European Patent Office
Office européen des brevets

(11) Publication number: **0 027 145**
**B1**

(12)

# EUROPEAN PATENT SPECIFICATION

(45) Date of publication of patent specification: **15.08.84**

(51) Int. Cl.³: **B 23 K 20/00,** B 32 B 15/18, B 23 K 11/00

(21) Application number: **80900504.4**

(22) Date of filing: **14.03.80**

(86) International application number: **PCT/JP80/00044**

(87) International publication number: **WO 80/02246 30.10.80 Gazette 80/25**

(54) **CLAD STEEL PLATE.**

(30) Priority: **18.04.79 JP 52585/79 U**

(43) Date of publication of application: **22.04.81 Bulletin 81/16**

(45) Publication of the grant of the patent: **15.08.84 Bulletin 84/33**

(84) Designated Contracting States: **DE FR GB**

(56) References cited:
JP - B - 46 038 005
JP - U - 51 106 229
US - A - 4 011 981

(73) Proprietor: **TAKAYASU, Akira**
**5-1, Horita-dori Mizuho-ku**
**Nagoya-shi Aichi 467 (JP)**

(72) Inventor: **TAKAYASU, Akira**
**5-1, Horita-dori Mizuho-ku**
**Nagoya-shi Aichi 467 (JP)**

(74) Representative: **Godwin, Edgar James et al,**
**MARKS & CLERK 57-60 Lincoln's Inn Fields**
**London, W.C.2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 027 145 B1

## Description

This invention relates to clad steel plates manufactured by cladding a plate of steel, such as carbon steel or alloy steel, with an anticorrosive metal plate.

Up to now, anticorrosive plates of metals such as titanium, tantalum, niobium, zirconium, and the like having an excellent corrosion resistance have widely been used for applications including chemical instruments. Particularly, anticorrosive metal plate of heavy-gauge are used in large-size instruments, vacuum instruments, and the like. However, such anticorrosive metals are very expensive, so that the instruments using heavy-gauge material of such a metal are restricted in the use range.

Now, there has been proposed an attempt of reducing the material cost by using a clad steel plate consisting of a steel plate having a certain strength and an anticorrosive metal plate covered thereon, but it is difficult to sufficiently bond the anticorrosive metal plate to the steel plate by usual welding. Therefore, there are often used explosive welded clad plates produced by cladding the anticorrosive metal plate on the steel plate by an explosive welding process using a powder. However, these explosive welded clad plates are required to take a long time for the completion of production owing to the presence of patent right and other circumstances, so that they have such drawbacks that the delivery time becomes long, the working step is dangerous and the production cost is high, and are still used in only special applications.

According to Japanese patent JP—B1—46 38005 it has been proposed to sandwich two thin metal sheets between a steel plate and a plate of titanium, zirconium, or an alloy thereof and then spot welding them together. However, as that patent points out, it is often the case that one sheet melts excessively while the other has not yet melted. Accordingly, reliable welding cannot be achieved, and the Japanese patent therefore proposes instead that a single sheet of silver, copper, or nickel, or an alloy thereof, be disposed between the plates, which are then joined by resistance welding.

Similarly JP—U—51—106229 discloses bonding a steel plate and a titanium plate together through two thin copper sheets subjected to local fusion, e.g. by seam welding.

It is an object of the invention to solve the above mentioned drawbacks of the prior art and to provide clad steel plates which are safe and simple in the working step, short in the delivery time, and low in the production cost, and have a high peel strength and excellent electrical and heat conductivities.

Accordingly, the invention provides a method of producing a clad steel plate, in which an anticorrosive metal plate is applied to a steel plate, two layers of metal being sandwiched beween the plates, and the assembly being locally bonded together by welding, characterised in that the said two layers are a copper thin sheet and a stainless steel net and the copper thin sheet is fused into the meshes of the net and is therefore in contact with both plates.

The invention also provides a clad steel plate comprising an anticorrosive metal plate applied to a steel plate, two layers of material having been sandwiched between the plates and the assembly having been locally bonded together by welding, characterised in that the said two layers are a copper thin sheet and a stainless steel net, the copper thin sheet having been fused into the meshes of the net and therefore being in contact with both plates.

An embodiment of the invention will be described with reference to the accompanying drawings, in which:

Figs. 1(a) ~ (d) are diagrammatic views showing each member of a clad steel plate according to the invention and the cladding state thereof, respectively; and

Fig. 2 is a perspective view illustrating the clad steel plate produced by locally bonding the steel plate to the anticorrosive metal plate by seam welding.

In the drawings, numeral 1 indicates a plate of steel such as low carbon steel, alloy steel, or the like, numeral 2 a stainless steel net, numeral 3 a copper thin sheet, and numeral 4 an anticorrosive metal plate, of titanium, tantalum, niobium, zirconium, or the like.

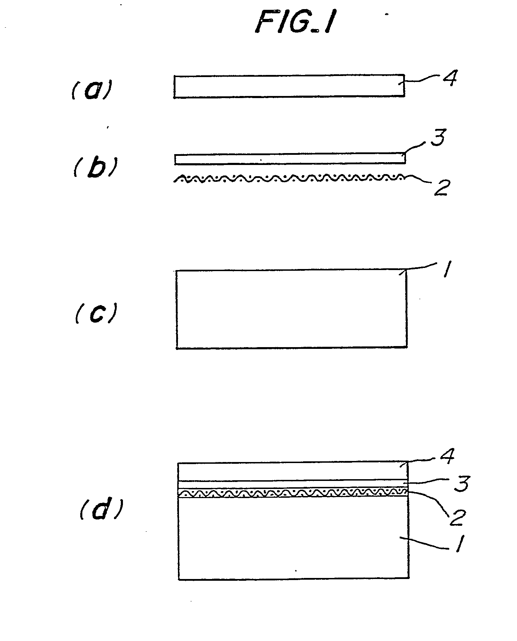

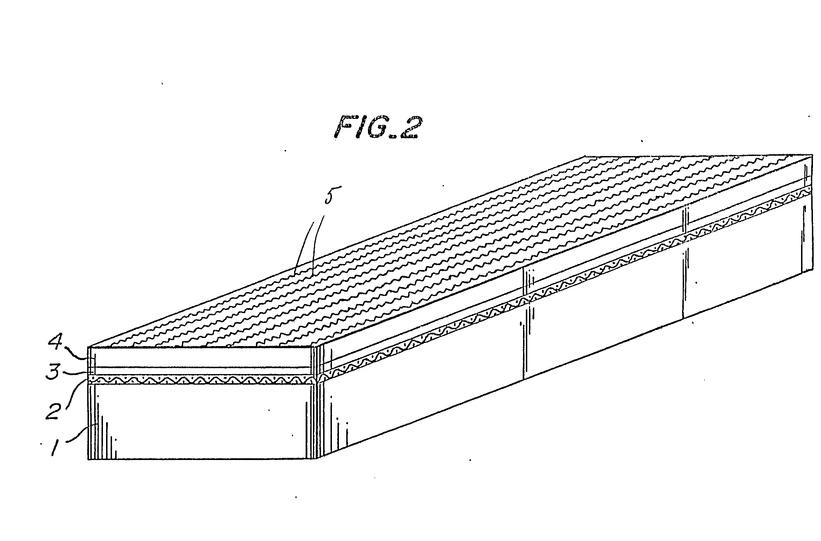

In the production of clad steel plates using such members, the anticorrosive metal plate 4 with a thickness of, for example 0.1 ~ 1.0 mm as shown in Figure 1(a), the copper thin sheet with a thickness of, for example, 0.1 ~ 0.5 mm and the stainless steel net 2 of 304 mesh made of SUS material as shown in Fig. 1(b) and the steel plate 1 with a thickness of, for example, 2 ~ 20 mm as shown in Figure 1(c) are cut into the same shape, respectively, and then piled one upon the other so as to sandwich the stainless steel net 2 and the copper thin sheet 3 between the steel plate 1 and the anticorrrosive metal plate 4 as shown in Fig. 1(d). In this case, the stainless steel net 2 and copper thin sheet 3 may temporarily be bonded to the steel plate 1 before the anticorrosive metal plate 4 is placed thereon. Then, the assembled sandwich structure is subjected to seam welding for the formation of seam beads 5 as shown in Fig. 2, whereby the copper thin sheet 3 is fused into the meshes of the stainless steel net 2 and is therefore in contact with the steel plate 1 and the anticorrosive metal plate 4, thereby bonding the plates 1 and 4 to each other owing to the local welding between portions to be joined. In addition to seam welding, spot welding may be used. When the assembly is subjected to seam welding with a seam width of 3 ~ 5 mm and an interval of about 15 mm, the resulting clad steel plate has a sufficient peel strength and excellent electrical and heat conductivities.

According to the clad steel plate of the above structure, the heat conductivity can be increased to about 10% as compared with the clad steel plate produced (according to JP—U—51—106229) by sandwiching two copper thin sheets between the steel plate and the anticorrosive metal plate without decreasing the electrical conductivity. Furthermore, the peel strength of the former can be increased to about 143 N/mm$^2$ as compared with that of the latter being about 110 N/mm$^2$. Thus, the clad steel plates according to the invention are favorable for use in large-size instruments and vacuum instruments as well as double-wall heat transmitting tubes, materials for electrode plate and the like.

Moreover, if it is intended to require the more increase of the peel strength, the local welding as described above may be performed by reversing the order of stainless steel net and copper thin sheet shown in the drawing, whereby the peel strength can be increased to about 152 N/mm$^2$.

As mentioned above, the clad steel plates according to the invention, wherein the stainless steel net and copper thin sheet are sandwiched between the steel plate and the anticorrosive metal plate, have the following merits:

(1) In the conventional explosive welding process, it is difficult to use a thin anticorrosive metal plate. On the contrary, the thickness of the anticorrosive metal plate can be selected in accordance with the use conditions in the clad steel plate according to the invention, so that the production cost can reduce considerably.

(2) In the conventional explosive welding process, the production equipment and operation become large-scaled beyond expectations and the working site should be located far from town. While, according to the invention, the steel plate and anticorrosive metal plate are bonded by welding to each other through the stainless steel net and copper thin sheet, so that the equipment and working operation are simple, the working site is out of the question, and the delivery time becomes fast. Furthermore, the clad steel plate can easily be produced in accordance with the quantities of raw material used even if such a quantity is small.

(3) According to the invention, powders and the like are not used as mentioned on the above item (2), so that there is no source for public nuisance such as noise or the like.

(4) The anticorrosive metal plate is bonded by welding to the steel plate with a sufficient strength, so that the resulting clad steel plate can be used as a material for vacuum instruments, high pressure instruments or the like without troubles.

(5) Not only the clad steel plate having excellent electrical and heat conductivities is obtained by using the copper thin sheet as a middle member, but also it is attempted to more improve the heat conductivity by fusing the copper thin sheet into the meshes of the stainless steel net. Therefore, the clad steel plates according to the invention are particularly favorable as a material for heat conductive instruments and electrical conductive instrument.

(6) According to the invention, there is no danger in the working accompanied with the explosive welding.

## Claims

1. A method of producing a clad steel plate, in which an anticorrosive metal plate (4) is applied to a steel plate (1), two layers of material being sandwiched between the plates (1, 4), and the assembly being locally bonded together by welding, characterised in that the said two layers are a copper thin sheet (3) and a stainless steel net (2) and the copper thin sheet (3) is fused into the meshes of the net (2) and is therefore in contact with both plates (1, 4).

2. A method as claimed in claim 1, in which the assembly is bonded by seam welding.

3. A clad steel plate comprising an anticorrosive metal plate (4) applied to a steel plate (1), two layers of material having been sandwiched between the plates (1, 4) and the assembly having been locally bonded together by welding, characterised in that the said two layers are a copper thin sheet (3) and a stainless steel net (2), the copper thin sheet (3) having been fused into the meshes of the net (2) and therefore being in contact with both plates (1, 4).

4. A clad steel plate as claimed in claim 3, in which the anticorrosive plate (4) comprises titanium, tantalum, niobium, or zirconium.

## Revendications

1. Procédé pour produire une plaque d'acier revêtue d'un placage, selon lequel une plaque de métal anticorrosive (4) est appliquée sur une plaque d'acier (1), deux couches de matériau étant interposées entre les plaques (1, 4) et l'ensemble étant localement lié par soudage, caractérisé en ce que lesdites deux couches sont respectivement une feuille mince de cuivre (3) et un filet en acier inoxydable (2) et la feuille mince de cuivre (3) est fondue à l'intérieur des mailles du filet (2) et est ainsi en contact avec les deux plaques (1, 4).

2. Procédé selon la revendication 1, selon lequel l'ensemble est lié par un soudage en cordon.

3. Plaque d'acier revêtue d'un placage comprenant une plaque de métal anticorrosive (4) appliquée sur une plaque d'acier (1), deux couches de matériau ayant été interposées entre les plaques (1, 4) et l'ensemble ayant été localement lié par soudage, caractérisée en ce que lesdites deux couches sont respectivement une feuille mince de cuivre (3) et un filet en acier inoxydable (2), la feuille mince de cuivre (3) ayant été fondue à l'intérieur des mailles du filet (2) et étant ainsi en contact avec les deux plaques (1, 4).

4. Plaque d'acier revêtue d'un placage selon la revendication 3, dans laquelle la plaque anticorrosive (4) renferme du titane, du tantale, du niobium ou du zirconium.

**Patentansprüche**

1. Verfahren zum Herstellen einer plattierten Stahlplatte, bei dem eine antikorrosive Metallplatte (4) auf eine Stahlplatte (1) aufgebracht wird, wobei zwei Materialschichten sandwichartig zwischen den Platten (1, 4) eingelagert werden und wobei die Anordnung örtlich durch Schweißen verbunden wird, dadurch gekennzeichnet, daß die beiden Schichten ein Kupferfeinblech (3) und ein rostfreies Stahlnetz (2) sind und das Kupferfeinblech (3) in die Maschen des Netzes (2) hinein verschmolzen wird und somit in Kontakt mit den beiden Platten (1, 4) gelangt.

2. Verfahren nach Anspruch 1, dadurch gekennzeichnet, daß die Anordnung durch Nahtschweißen verbunden wird.

3. Plattierte Stahlplatte, die eine auf eine Stahlplatte (1) aufgebrachte antikorrosive Metallplatte (4) enthält, wobei zwei Materialschichten sandwichartig zwischen die Platten (1, 4) eingelagert sind und die Anordnung örtlich durch Schweißen verbunden ist, dadurch gekennzeichnet, daß die beiden Schichten ein Kupferfeinblech (3) und ein rostfreies Stahlnetz (2) sind, wobei das Kupferfeinblech (3) in die Maschen des Netzes (2) hinein verschmolzen und somit in Kontakt mit den beiden Platten (1, 4) ist.

4. Plattierte Stahlplatte nach Anspruch 3, dadurch gekennzeichnet, daß die antikorrosive Platte (4) aus Titan, Tantal, Niob oder Zirkon besteht.

FIG_1

(a)

4

(b)

3
2

(c)

1

(d)

4
3
2
1

FIG.2
5
4
3
2
1